# EUROPEAN PATENT APPLICATION

(11) **EP 2 420 325 A2**
(43) Date of publication of application: **22.02.2012**
(21) Application number: 11176699.4
(22) Date of filing: 05.08.2011
(51) Int. Cl.: B05C 5/02, B05C 9/04

(54) **Double side coating device**

(30) Priority: 16.08.2010 JP 2010181561
(71) Applicant: Chugai Ro Co., Ltd., Osaka 541-0046 (JP)
(72) Inventor: Tokumoto, Takao, Osaka-shi Osaka 541-0046 (JP); Touchi, Hachiro, Osaka-shi Osaka 541-0046 (JP)
(74) Representative: Glawe, Delfs, Moll

(57) **Abstract**

A double side coating device which can maintain a thickness of a coated film in constant has a first coating head (1) that coats a first surface of a web material (W) with a coating material (P), two or more vacuum conveyors (4) that are placed downstream of the first coating head (1) in a conveying direction for the web material (W) and have a endless belt (7) formed with a number of through holes (9) and a vacuum chamber (8) sucking the web material (W) through the through holes (9) so as to suck uncoated portions of the first surface of the web material (W), and a second coating head (3) that is placed opposite to the vacuum conveyors (4) and coats a second surface of the web material (W) with a coating material (P).

## Description

### FIELD OF THE INVENTION

The present invention relates to a double side coating device for applying coating material to both surfaces of a web material.

### DESCRIPTION OF THE RELATED ART

In case that both surface of a web material should be coated, generally, the web material is coated on one surface with coating material with a one side coating device. Then, the coating material is dried, and subsequently the web material is rewound. The rewound web material is put again in the one side coating device to be applied with coating material on the other surface. Further, there is a continuous coating device which applies a coating material on one side first and dries the applied coating material, then applies a coating material on the other side and dries the applied coating material.

With increasing of needs for electric vehicle and the like, energy density growth and price reduction of secondary battery are strongly required. In production of the secondary battery cell, a coating device that can apply active material to both surfaces of a metallic foil electrode is required.

Generally, in a coating device applying coating material with a die head, a thickness of a coated film is maintained in constant by arranging the die head opposing to a web material wound around a back up roller to keep the gap between the web material and the die head in constant. To provide two die heads that respectively coat the web material wound around the back up rollers to allow coating on both surfaces of the web material, it is required to dry the coating material applied by the first die head before the web material is wound around the second back up roller. Accordingly, two dryers are required and therefore the facility gets longer and the equipment cost is increased.

In JP-A-H3-72976 and JP-A-H10-216603, there are described coating devices with two die head arranged so as to nip a web material. However, since the coating devices can not hold the web material when coating, the web material oscillate between the die heads to vary gaps between the die heads and the web material, and therefore a variance in thickness of the coated film is caused.

In JP-A-2008-284528, there is described an invention with a roller arranged just before a die head to nip the web material and a roller arranged just after the die head to nip margin portions where are not coated at both side of the web material to apply a tension. However, even in this coating device, the web material is not supported at the moment of being coated, and therefore it is difficult to absolutely prevent the oscillation of the web material.

In JP-A-H2-214564, there is described an invention that supports a coated surface of a web material in an air floating condition by a roller ejecting air through a plurality of small holes provided on the surface of the roller, to coat other side of the web material with a die head placed opposite to the air floating roller. Also in this case, it is difficult to keep a thickness of the air layer supporting the web material, and therefore the gap between the die head and the web material varies so as to cause a variance in thickness of the coated film.

In JP-A-H7-185436, there is described an invention that supports a coated face of a web material by a grooved roller rotating in counter direction to the web material, to coat other side of the web material with a die head placed opposite to the grooved roller. In this invention, coating material applied on the portions contracting with projections between the grooves are pushed out to the portion inside the grooves at the moment that the web material is supported by the grooved roller. Therefore, this invention can be applied in only case that the coating material can recover the uniform thickness of the coated film due to a physicality of the coating material when the web material gets away from the grooved roller.

In view of the above problem, an object of the present invention is to provide a double side coating device which can maintain a thickness of a coated film in constant.

### SUMMERY OF THE INVENTION

In order to achieve the above object, a double side coating device according to the present invention has a first coating head that coats a first surface of a web material with a coating material, two or more vacuum conveyors that are placed downstream of the first coating head in a conveying direction for the web material, and have a endless belt formed with a number of through hole and a vacuum chamber sucking the web material through the through holes, so as to suck uncoated potions of the first surface of the web material, and a second coating head that is placed opposite to the vacuum conveyors and coats a second surface of the web material with a coating material.

In accordance with this configuration, when the second coating head coats the second surface of the web material, the vacuum conveyors suck a uncoated portions of the first surface of the web material, i.e. a margin portion to support the web material. Therefore, the relative position of the web material with respect to the second coating head can be strictly kept so as to form a coated film with a uniform thickness.

The double side coating device according to the present invention may further has a static pressure pad that is placed between the vacuum conveyors and blows out gas toward the first surface of the web material.

In accordance with this configuration, the portion stretched between the vacuum conveyors can be supported by a pressure of gas so as to prevent the stretched portion from denting caused by a ejecting pressure of the coating material in the second coating head or by a weight of the coating material applied on the first surface. Therefore, the thickness of the coated film can be uniformed widthwise.

In the double side coating device according to the present invention, the vacuum conveyors may be placed so that a distance from each other downstream is longer than upstream.

In accordance with this configuration, the web material is stretched widthwise by the vacuum conveyors so as to be applied with a tension. Therefore, the web material can be kept flat by the tension when the second surface is coated. Accordingly, a gap between with the second coating head can be maintained in constant so that a coated film with uniformed thickness is formed.

The double side coating device according to the present invention may further has a back up roller that is placed opposite to the first coating head and supports the web material.

In accordance with this configuration, a coating on the first surface is easily processed.

In the double side coating device according to the present invention, the first coating head may apply the coating material to the first surface of the web material in a form of a plurality of lines, and the vacuum conveyor may be also provided in a position where the vacuum conveyor sucks the portion between the coating material applied in the form of the plurality of the lines.

In accordance with this configuration, the coating device can form linear coated films in parallel to each other on a wider web material. Therefore, a throughput can be increased.

According to the present invention, when coating of the second surface of the web material, the vacuum conveyors suck uncoated margin portions of the web material to support the web material. Therefore, the web material does not oscillate so that a coated film can be formed at a uniformed thickness. Further, since the vacuum conveyors do not contact with the coated film on the first surface, drying of the coated film on the first surface is not required before coating of the second surface. Accordingly, equipment can be downsized and energy consumption is small.

### BRIEF DESCRIPTION OF THE DRAWINGS

Fig. 1 is a partial perspective view of a double side coating device as a embodiment of the present invention;
Fig. 2 is a sectional view in a conveying direction for the double side coating device in the Fig. 1; and
Fig. 3 is an axial sectional view of the second coating head in the Fig. 1.

### DETAILED DESCRIPTION OF THE PREFERRED EMBODIMENT

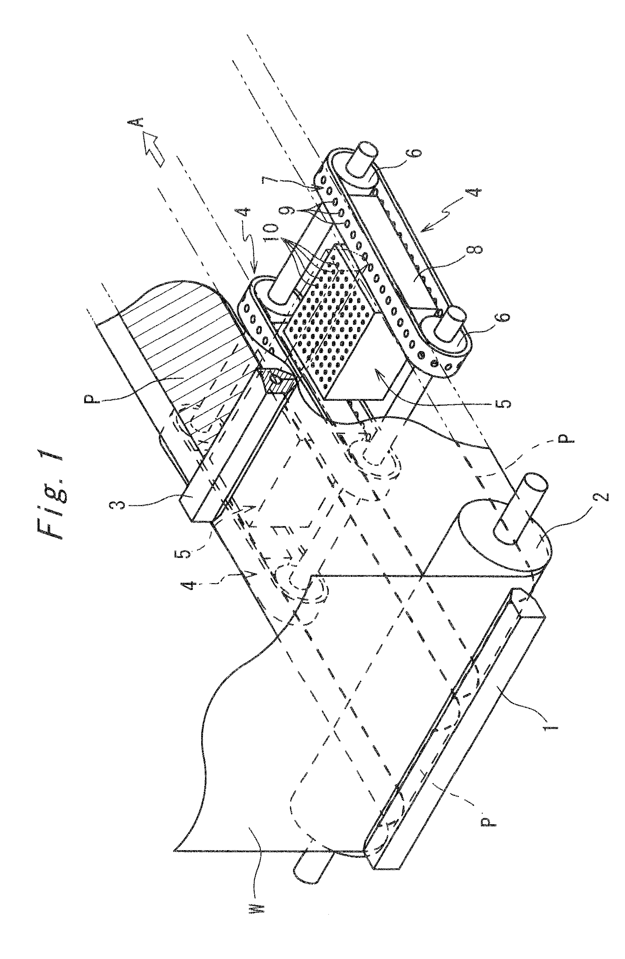

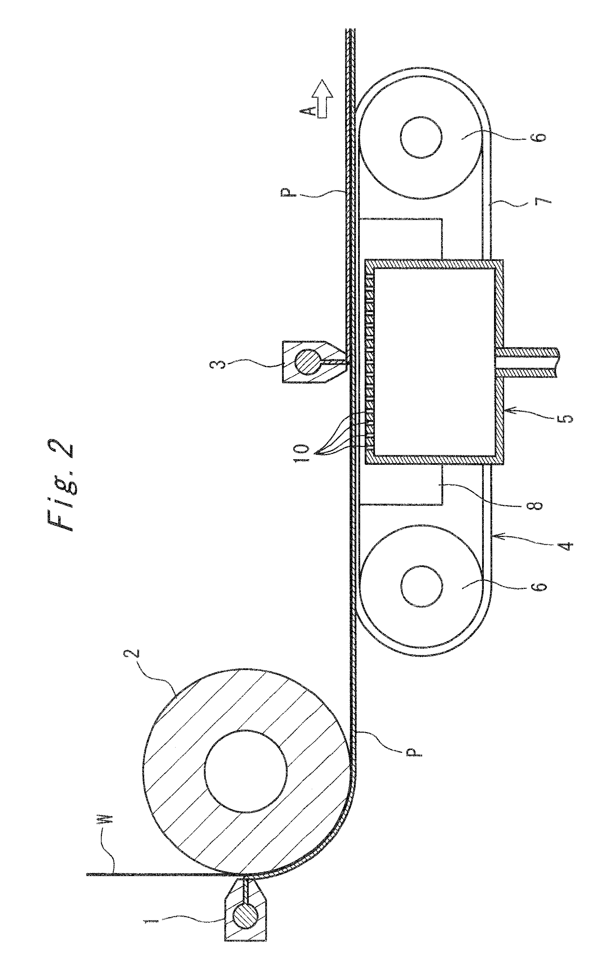

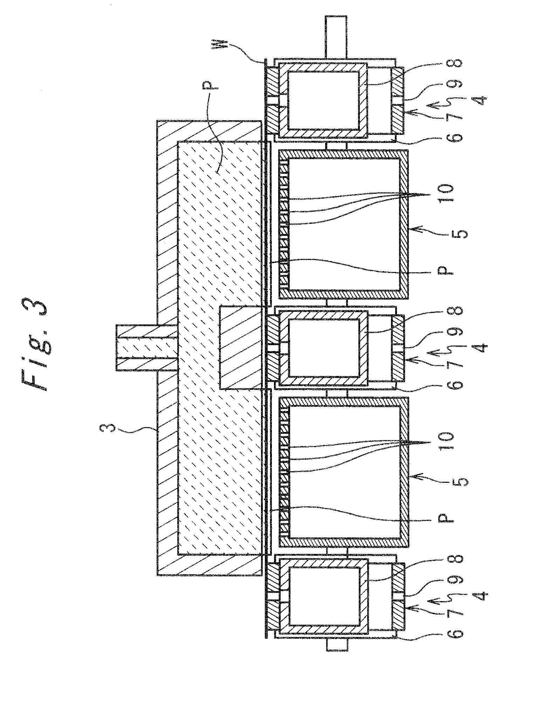

Hereinafter, embodiments of the present invention will be described referring to the attached drawings. Figs. 1 to 3 show a construction of a portion related to a coating process in a double side coating device as an embodiment of the present invention. The double coating device of this embodiment conveys a web material W in a direction of arrow A. And this double coating device has a first coating head (coating die) 1 that applies coating material P in a form of two lines on a first surface (back side) of a web material W, a back up roller 2 that supports a second surface of the web material W in a position opposite to the first coating head 1, a second coating head (coating die) 3 that applies coating material P in a form of tow lines on a second surface (front surface) down stream of the first coating head 1 in the conveying direction A for the web material W so that the two lines corresponds to the coating material coated on the first surface in opposite side, three vacuum conveyors 4 that suck uncoated portions (margin portion) of the first surface of the web material W and conveys the web material W in the position opposite to the second coating head 3, and two static pressure pads 5 that are placed between the vacuum conveyors 4 and that blow out air toward coated portions of the first surfaces of the web material W.

The vacuum conveyors 4 are respectively provided with a endless belt 7 stretched over two pulleys 6 and driven at a speed slightly higher than the conveying speed for the web material W, and a vacuum chamber 8 opening back side of the endless belt 7 and vacuumed its inner space. The endless belt 7 is formed with a number of through holes 9, and therefore the vacuum chamber 8 sucks the web material W coming close to the top face of the endless belt 7 through the through holes 9.

The vacuum conveyors 4 on both sides are arranged so as to be slightly angled with respect to the conveying direction A for the Web material W. That means three vacuum conveyors 4 are arranged so that the distance to each other downstream is larger than upstream. Therefore, the vacuum conveyors 4 move so as to elongate the distance between portions of the web material 10 where are sucked by the through holes 9. The sucking force of the vacuum conveyors 4 are an extent of that the web material W slips on the surface of the vacuum conveyors 4 when the tension of the web material W is raised. Therefore, the web material W is applied with a tension widthwise by continuously widening the web material W by the vacuum conveyors 4.

The static pressure pads 5 are formed in hollow box shapes, and provided with a number of small openings 10. The static pressure pads 5 are connected to an unshown pressurized air source so as to blow out air toward the coated portion of the web material W from the small openings 10.

In the double side coating device of this embodiment, when the second coating head coats the second surface opposing the first surface coated by the first coating head 1 of the web material W, the vacuum conveyors 4 suck and support the first surface of the web material W. Therefore, the gap between the second surface of the web material W and the second coating head 3 is maintained in constant, and consequently the thickness of the coated film made by the second coating head 3 can be uniformly regulated.

At this time, since the vacuum conveyors 4 are placed so that more downstream, a distances from each other get longer, the vacuum conveyors 4 apply to the web material W with a tension widthwise. Therefore, the web material W is prevented from sagging at a portion being coated by the second coating head 3.

Further, the static pressure pad 5 supports the web material W against a weight of the coating material P applied on the first surface of the web material W and discharging pressure of the coating material P to be applied on the second surface of the web material W so that the web material W does not sag down. Therefore, the air pressure of the static pressure pad 5 should be at a low pressure so far as the blown air does not rough a surface of the coating material on the first surface.

As described above, the present invention supports the web material W by the vacuum conveyors 4 and the static pressure pads 5 without touching the coated film on the first surface so as to maintain the second surface at a constant distance from the second coating head 3, and therefore a coated film with a constant thickness can be formed on the second surface.

Further, since the present invention does not need a drying process between the first coating head 1 and the second coating head 3, the coating device can be downsized and use less energy.

Moreover, in this embodiment, if the static pressure pad 5 blow hot air toward the web material W, a drying time of the coating material P in a drying device (not shown) can be reduced.

While the above embodiment applies coating material P in two lines, a coating device applying coating material P in one line or three or more lines can be configured according the present invention.

In the case that four or more vacuum conveyors 4 are provided for coating in three or more lines, the vacuum conveyors 4 may be placed either so that all distances between vacuum conveyors 4 downstream are longer than upstream respectively, or so that only two vacuum conveyors on outsides are arranged at an angle. Also, by arranging two vacuum conveyors on outsides at an angle, the web material W slips on the endless belts 7 so as to apply a tension to the web material between the vacuum conveyors 4 on inside.

In accordance with the present invention, as substitute for the back up roller 2 in the above embodiment, a configuration similar to the vacuum conveyors 4 and the static pressure pads 5 may be provided.

Of cause, with the coating device according to the present invention, different coating materials can be applied to the first surface and the second surface of the web material W.

| | | | | | |
|---|---|---|---|---|---|
| 1 | ··· | first coating head | 2 | ··· | back up roller |
| 3 | ··· | second coating head | 4 | ··· | vacuum conveyor |
| 5 | ··· | static pressure pad | 6 | ··· | pulley |
| 7 | ··· | endless belt | 8 | ··· | vacuum chamber |
| 9 | ··· | through hole | 10 | ··· | small hole |
| P | ··· | coating material | W | ··· | web material |

## Claims

1. A double side coating device having
a first coating head that coats a first surface of a web material with a coating material,
two or more vacuum conveyors that are placed downstream of the first coating head in a conveying direction for the web material and have a endless belt formed with a number of through holes and a vacuum chamber sucking the web material through the through holes so as to suck uncoated portions of the first surface of the web material, and
a second coating head that is placed opposite to the vacuum conveyors and coats a second surface of the web material with a coating material.

2. The double side coating device according to the claim 1 further having a static pressure pad that is placed between the vacuum conveyors and blows out gas toward the first surface of the web material.

3. The double side coating device according to the claim 1 or 2 wherein the vacuum conveyors are placed so that a distance from each other downstream is longer than upstream.

4. The double side coating device according to any one of the claims 1 to 3 further having a back up roller that is placed opposite to the first coating head and supports the web material.

5. The double side coating device according to any one of the claims 1 to 4 wherein
the first coating head applies the coating material to the first surface of the web material in a form of a plurality of lines, and
the vacuum conveyor is also provided in a position where the vacuum conveyor sucks the portion between the coating material applied in the form of the plurality of the lines.
